Europäisches Patentamt

European Patent Office

Office européen des brevets

(11) Veröffentlichungsnummer: **0 062 906**
**B1**

(12) **EUROPÄISCHE PATENTSCHRIFT**

(45) Veröffentlichungstag der Patentschrift:
24.10.84

(21) Anmeldenummer: 82103034.3

(22) Anmeldetag: 08.04.82

(51) Int. Cl.³: **C 09 J 3/14, C 08 L 31/04,
C 08 L 29/04**

(54) **Wässrige Polyvinylester-Dispersion, Verfahren zu ihrer Herstellung und ihre Verwendung.**

(30) Priorität: 15.04.81 DE 3115163

(43) Veröffentlichungstag der Anmeldung:
20.10.82 Patentblatt 82/42

(45) Bekanntmachung des Hinweises auf die Patenterteilung:
24.10.84 Patentblatt 84/43

(84) Benannte Vertragsstaaten:
AT CH DE GB LI LU

(56) Entgegenhaltungen:
DE - A - 2 158 604
DE - B - 1 289 594
US - A - 2 404 519

(73) Patentinhaber: HOECHST AKTIENGESELLSCHAFT,
Postfach 80 03 20, D-6230 Frankfurt am Main 80 (DE)

(72) Erfinder: Ehmann, Werner, Dr., Im Mainfeld 23,
D-6000 Frankfurt am Main 71 (DE)
Erfinder: Rinno, Helmut, Dr., Goethestrasse 38,
D-6238 Hofheim am Taunus (DE)

**Beschreibung**

Die Erfindung bezieht sich auf eine modifizierte wässerige Polyvinylesterdispersion, Verfahren zu ihrer Herstellung und ihre Verwendung als Klebstoff.

Es ist bekannt, wässerige Polyvinylacetatdispersionen, deren polymere noch geringe Mengen andere mit Vinylacetat mischpolymerisierbare olefinisch ungesättigte Verbindungen einpolymerisiert enthalten können, herzustellen und zum Verkleben von verschiedenen Materialien, besonders von Holz, zu verwenden. Derartige Dispersionen enthalten meist Polyvinylalkohol, der während der Herstellung als Schutzkolloid diente oder auch der fertigen Dispersion zugesetzt wurde. Die Polymerisation des Vinylacetats wird üblicherweise in Emulsion in der wässerigen Lösung des Polyvinylalkohols mittels radikalbildender Initiatoren vollzogen (vgl. deutsche Auslegeschrift Nr. 1 151 663 = britische Patentschrift Nr. 994380).

Neben den Eigenschaften, die man von allen Kunststoffdispersionen fordert, wie gutes Fliessverhalten und dadurch Verarbeitbarkeit, Koagulatfreiheit, Lager- und Temperaturbeständigkeit, ist bei Polyvinylacetatklebstoffdispersionen noch besonders wichtig, dass eine hohe Festigkeit der Verklebung erreicht wird.

Es ist üblich, Polyvinylesterdispersionen durch Einarbeiten von Substanzen, die mit Polyvinylacetat verträglich sind oder die Filmbildetemperatur herabsetzen und die Dispersionen äusserlich weichmachen, zu modifizieren; solche Substanzen sind Ester der Phthalsäure, der Sebacinsäure, der Adipinsäure oder der Phosphorsäure, z.B. Dibutylphthalat. Dabei treten aber verschiedene Nachteile auf, z.B. Geruchsbelästigung, Toxizität oder ein Wiederausschwitzen dieser Zusatzstoffe. Die hohe Klebekraft der Polyvinylesterdispersionen bei Holz beruht unter anderem auf einer gewissen Härte und Zähigkeit der Leimfuge. Diese Eigenschaft geht bei der Weichmachung teilweise verloren.

Es wurde auch schon versucht, Substanzen, die mit Polyvinylacetat nicht verträglich sind, z.B. aliphatische Kohlenwasserstoffe, in Polyvinylalkohol enthaltende Polyvinylacetatdispersionen einzuarbeiten (vgl. US-Patentschrift Nr. 2404519). Diese Stoffe wurden, obwohl man sie durch intensives Rühren fein verteilte und durch langsames Abkühlen der heissen Dispersionen diese Verteilung zu stabilisieren suchte, nicht dauerhaft aufgenommen. Sie schieden sich beim Trocknen oder beim anschliessenden Erwärmen der Aufstriche wieder aus. Darauf beruht die Verwendung solcher Dispersionen zum Herstellen von relativ wasserfesten Überzügen.

Aufgabe der Erfindung ist die Schaffung einer Polyvinylesterdispersion, die ein Wachs, Fett und/oder Öl enthält, ohne dass ein Ausschwitzen dieser Zusatzstoffe aus den aufgetrockneten Dispersionen erfolgt.

Die Erfindung betrifft nun eine wässerige Polyvinylesterdispersion mit einem Feststoffgehalt von 40 bis 70 Gew.-%, wobei ein Teil der Feststoffe aus einem wachs-, fett- oder ölartigen Zusatzmittel besteht, dadurch gekennzeichnet, dass die Dispersion 5 bis 60 Gew.-% (bezogen auf die Gesamtmenge aus Polyvinylester und Zusatzmittel) eines wachs-, fett- oder ölartigen Zusatzmittels und 3 bis 15 Gew.-% (bezogen auf die Gesamtmenge aus Polyvinylester und Zusatzmittel) Polyvinylalkohol enthält, der einen Verseifungsgrad von 65 bis 99,5 Mol-% und dessen 4gew.-%ige wässerige Lösung eine Viskosität von 2 bis 50 mPa·s, gemessen bei einer Temperatur von 20° C, aufweist.

Die Erfindung betrifft ferner ein Verfahren zur Herstellung einer wässerigen Polyvinylesterdispersion mit einem Feststoffgehalt von 40 bis 70 Gew.-%, wobei ein Teil der Feststoffe aus einem wachs-, fett- oder ölartigen Zusatzmittel besteht, durch radikalische Polymerisation eines Vinylesters in wässeriger Emulsion in Gegenwart von Polyvinylalkohol, dadurch gekennzeichnet, dass man die Polymerisation in Gegenwart von 3 bis 15 Gew.-% (bezogen auf die Gesamtmenge aus Polyvinylester und Zusatzmittel) Polyvinylalkohol, der einen Verseifungsgrad von 65 bis 99,5 Mol-% und dessen 4gew.-%ige wässerige Lösung eine Viskosität von 2 bis 50 mPa·s aufweist, gemessen bei einer Temperatur von 20° C, und in Gegenwart des wachs-, fett- oder ölartigen Zusatzmittels durchführt.

Die Erfindung betrifft auch ein Verfahren zur Herstellung einer wässerigen Polyvinylesterdispersion mit einem Feststoffgehalt von 40 bis 70 Gew.-%, wobei ein Teil der Feststoffe aus einem wachs-, fett- oder ölartigen Zusatzmittel besteht, durch radikalische Polymerisation eines Vinylesters in wässeriger Emulsion in Gegenwart von Polyvinylalkohol, dadurch gekennzeichnet, dass man die Polymerisation in Gegenwart von 3 bis 154 Gew.-% (bezogen auf die Gesamtmenge aus Polyvinylester und Zusatzmittel) Polyvinylalkohol, der einen Verseifungsgrad von 65 bis 99,5 Mol-% und dessen 4gew.-%ige wässerige Lösung eine Viskosität von 2 bis 50 mPa·s aufweist, gemessen bei einer Temperatur von 20° C, durchführt und anschliessend das wachs-, fett- oder ölartige Zusatzmittel homogen in der erhaltenen Dispersion verteilt.

Der erfindungsgemäss verwendete Polyvinylalkohol ist ein Verseifungsprodukt eines Polyvinylacetats und hat einen Verseifungsgrad von 65 bis 99,5, vorzugsweise 80 bis 99 Mol-%. Die wässerige, 4gew.-%ige Lösung des Polyvinylalkohols weist eine Viskosität von 2 bis 50, vorzugsweise 2 bis 40 mPa·s auf (gemessen bei einer Temperatur von 20° C). Vorzugsweise wird ein Gemisch verschiedener Polyvinylalkohole verwendet, die sich in ihrem Verseifungsgrad und/oder ihrem Molekulargewicht unterscheiden. Der Polyvinylalkohol dient wenigstens teilweise bei der Emulsionspolymerisation als Schutzkolloid. Dabei ist es vorteilhaft, wenn die flüssige Phase für die Polymerisation nicht weniger als 5 Gew.-% Polyvinylalkohol enthält. Der Dispersion kann nach der Polymerisation weiterer Polyvinylalkohol zugegeben werden. Der Polyvinylalkohol ist in der fertigen Dispersion in einer Menge von 3 bis 15, vorzugsweise 5 bis 12 Gew.-%, enthalten (bezogen auf die Gesamtmenge aus Polyvinylester und Zusatzmittel).

Die Dispersion kann 0,05 bis 2 Gew.-% (bezogen auf die Gesamtmenge aus Polyvinylester und Zusatzmittel) ionische oder nichtionische Emulgatoren enthalten, z.B. Alkalimetallsalze höherer Fettsäuren, sulfatierte Fettalkohole, Alkyl-, Aryl- oder Alkylarylsulfonate, alkoxylierte Alkohole oder Phenole oder deren Sulfatierungsprodukte, Blockcopolymerisate von Polyalkylenoxiden oder Sulfobernsteinsäureester.

Der in der Dispersion dispergierte Polyvinylester ist ein Polymer eines Vinylesters einer aliphatischen Carbonsäure mit 2 bis 18, vorzugsweise 2 bis 12 Kohlenstoffatomen, insbesondere Vinylacetat sowie auch Vinylpropionat, Vinylbutyrat, Vinylpivalat, Vinylisononanat, Vinyllaurat, Vinyldecanat und Vinylester von verzweigten Carbonsäuren mit 9 bis 11 Kohlenstoffatomen. Der Polyvinylester kann auch ein Copolymer verschiedener Vinylester oder eines Vinylesters mit einer anderen copolymerisierbaren Verbindung sein.

Geeignete Comonomere sind insbesondere ungesättigte Carbonsäuren, z.B. Acrylsäure, Methacrylsäure, Itaconsäure, Maleinsäure, Maleinsäurehalbester, Maleinsäureanhydrid und auch Vinylsulfonsäure und deren Alkalimetallsalze.

Der Feststoffgehalt der Dispersion, d.h. die Menge des nichtflüchtigen Bestandteile der Dispersion, die die vorgenannten Zusatzmittel einschliessen, beträgt 40 bis 70, vorzugsweise 48 bis 68 Gew.-% (ermittelt nach DIN 53 189). Die Einführung des Zusatzmittels in die erfindungsgemässe Dispersion kann durch Einarbeiten in die durch Emulsionspolymerisation erhaltene Dispersion oder durch kontinuierliche oder portionsweise Zugabe im Laufe der Emulsionspolymerisation erfolgen. Die Polymerisation wird vorzugsweise jedoch vollständig in Gegenwart der Gesamtmenge des Zusatzmittels durchgeführt, da dadurch die an sich unverträglichen Partner Polyvinylester und Zusatzmittel in den innigsten Kontakt gebracht werden. Das Zusatzmittel darf keine Bestandteile enthalten, die die Polymerisation verhindern.

Das erfindungsgemässe Verfahren wird in Gegenwart eines radikalbildenden Initiators durchgeführt, insbesondere einer Peroxidverbindung oder einer aliphatischen Azoverbindung. Der Initiator ist wasserlöslich oder monomerlöslich. Vorzugsweise wird eine Kombination eines wasserlöslichen mit einem monomerlöslichen Initiator verwendet. Dabei beträgt das Gewichtsverhältnis von wasserlöslichem Initiator zu monomerlöslichem Initiator 0,05 : 1 bis 1,2 : 1, vorzugsweise 0,1 : 1 bis 0,9 : 1. Die Gesamtmenge des Initiators oder Initiatorgemisches liegt im Bereich von 0,01 bis 1, vorzugsweise 0,05 bis 0,5 Gew.-% (bezogen auf die Gesamtmenge der Monomeren). Der Initiator wird entweder insgesamt zu Beginn der Polymerisation eingesetzt oder im Laufe der Polymerisation kontinuierlich zudosiert.

Geeignete Peroxidverbindungen sind insbesondere Wasserstoffperoxid, Alkylhydroperoxide wie t-Butylhydroperoxid, Diacylperoxide wie Diacetylperoxid, Dilauroylperoxid und Dibenzoylperoxid, ferner Ammonium- oder Alkalimetallsalze der Peroxidischwefelsäure wie Natriumperoxidisulfat, Kaliumperoxydisulfat und Ammoniumperoxydisulfat, sowie Alkylester von aliphatischen Percarbonsäuren oder von Peroxidikohlensäure wie Isopropylperisobutyrat, t-Butylperisobutyrat, Isopropylperpivalat, t-Butylperpivalat, Isopropylperoctoat, t-Butylperoctoat, Diisopropylpercarbonat, Di-t-butylpercarbonat, Bis-(2-ethylhexyl)-percarbonat und Dicyclohexylpercarbonat.

Geeignete Azoverbindungen sind insbesondere Azodiisobuttersäurenitril und Azo-γ,γ-bis-(4-cyanvaleriansäure).

Der Initiator oder das Initiatorgemisch wird gegebenenfalls zusammen mit einem Schwermetallsalz eingesetzt, wobei die Menge des Schwermetallsalzes 2 bis 50 ppm beträgt (bezogen auf die Gesamtmenge der Monomeren). Vorzugsweise wird eine Kombination aus Wasserstoffperoxid, einer weiteren Peroxidverbindung oder einer Azoverbindung und einem Schwermetallsalz verwendet; geeignete Salze sind insbesondere Schwermetallsalze von niederen Carbonsäuren, z.B. Cobaltacetat und Eisen(II)acetat.

Der Initiator oder das Initiatorgemisch kann auch zusammen mit einem Reduktionsmittel verwendet werden, dessen Menge 0,05 bis 0,5, vorzugsweise 0,1 bis 0,3 Gew.-% beträgt (bezogen auf die Gesamtmenge der Monomeren). Geeignete Reduktionsmittel sind insbesondere Ammoniumsalze, Alkalisalze oder Erdalkalisalze von reduzierend wirkenden schwefelhaltigen Säuren, vorzugsweise Sulfite, Bisulfite, Pyrosulfite, Dithionite, Thiosulfate und Formaldehydsulfoxylate.

Der Initiator kann dem Reaktionsgemisch insgesamt zu Beginn der Polymerisation oder im Laufe der Polymerisation kontinuierlich zugegeben werden. Bei Verwendung eines Initiators in Kombination mit einem Reduktionsmittel gibt man eine Komponente des Redoxsystems insgesamt zu dem Polymerisationsgemisch und dosiert die andere Komponente kontinuierlich zu.

Der Vinylester, gegebenenfalls in Kombination mit einem Comonomer oder mehreren Comonomeren, kann kontinuierlich zur Polymerisationsflotte gegeben werden oder zum Teil im Reaktor vorgelegt werden, wobei der Rest im Laufe der Polymerisation zugefügt wird. Ferner kann der Vinylester in Form einer Voremulsion zusammen mit Polyvinylalkohol, Initiator und Zusatzmittel kontinuierlich in den Reaktor gegeben werden. Zur Steuerung der Reaktionsgeschwindigkeit können retardierende Substanzen, vorzugsweise Hydrochinon, Hydrochinonderivate oder aromatische Nitroverbindungen, eingesetzt werden. Gegebenenfalls wird auch ein handelsübliches Entschäumungsmittel verwendet, beispielsweise auf Polysiloxanbasis. Bevorzugt ist jedoch eine Verfahrensweise, bei der sämtliche Rohstoffe vor Beginn der Polymerisation im Reaktor zusammengebracht werden.

Ein wesentliches Merkmal des erfindungsgemässen Herstellungsverfahrens ist die Verwendung eines wachs-, fett- oder ölartigen Zusatzmittels oder eines Gemisches solcher Zusatzmittel, die aus dem aus der Dispersion erhaltenen Film nicht ausschwitzen.

Unter wachsartigem Zusatzmittel werden insbesondere Kohlenwasserstoffwachse, beispielsweise Paraffine, Ozokerite, mikrokristalline Wachse, Syntheseparaffine und Polyolefinwachse verstanden. Bevorzugt verwendet werden Paraffine mit einem Schmelzpunkt unterhalb des Siedepunktes des Vinylesters, insbesondere mit einem Schmelzpunkt im Bereich von 45 bis 70° C.

Fettartiges Zusatzmittel bedeutet insbesondere feste Triglyceride tierischen oder pflanzlichen Ursprungs, vorzugsweise Talg mit einem Schmelzpunkt von 35 bis 50° C oder Palmkernfett mit einem Schmelzpunkt von 20 bis 30° C, wobei diese Fette auch hydriert sein können, z.B. gehärteter Talg mit einem Schmelzpunkt von 55 bis 60° C und gehärtetes Pflanzenfett mit einem Schmelzpunkt von 55 bis 70° C, aber auch weiche fettähnliche Kohlenwasserstoffe, beispielsweise Vaseline. Die Jodzahl des fettartigen Zusatzmittels liegt im Bereich von 0 bis 200, vorzugsweise 0 bis 50.

Ölartiges Zusatzmittel bedeutet insbesondere flüssige Triglyceride tierischer oder pflanzlicher Herkunft, beispielsweise Kokosöl, Sonnenblumenöl und Baumwollsaatöl; diese Öle können auch hydriert sein. Ferner gehören dazu gesättigte flüssige Kohlenwasserstoffe mit Siedepunkten unter Normalbedingungen höher als 200, vorzugsweise höher als 300° C, beispielsweise Paraffinöl und Weissöl. Die Jodzahl des ölartigen Zusatzmittels liegt im Bereich von 0 bis 200, vorzugsweise 0 bis 50.

Die festen und flüssigen Triglyceride haben Verseifungszahlen von 180 bis 270 und Schmelzpunkte von 10 bis 90, vorzugsweise 20 bis 70° C.

Die Menge an wachs-, fett- oder ölartigen Zusatzmittel, die in der erfindungsgemässen Dispersion enthalten ist, beträgt 2 bis 70, vorzugsweise 5 bis 50, im besondere 10 bis 40 Gew.-% (bezogen auf die Gesamtmenge aus Polyvinylester und Zusatzmittel). Die Polymerisation wird in Gegenwart der Gesamtmenge des Zusatzmittels durchgeführt, oder das Zusatzmittel wird in der nach Beendigung der Polymerisation erhaltenen Dispersion homogen verteilt, z.B. durch Einrühren.

Aus Aufstrichen und Verklebungen, die aus der erfindungsgemässen Dispersion hergestellt worden sind, scheiden sich die erfindungsgemäss eingesetzten Zusatzmittel nicht wieder aus. Unverträglichkeiten, die bei der Anwendung stören, treten daher nicht auf.

Die erfindungsgemässe Dispersion zeigt eine Viskosität von 1 bis 100, vorzugsweise von 5 bis 60 Pa·s (Epprecht Viskosimeter Rheomat 30, System C 1). Aus der Dispersion hergestellte Aufstriche sind hydrophil und leicht mit Wasser zu reemulgieren. Diese Reemulgierbarkeit bleibt auch bei mässigem Erhitzen bestehen. Die Dispersion ist ohne Schwierigkeit zu verarbeiten und durch gute Klebeeigenschaften ausgezeichnet, besonders für cellulosehaltige Stoffe, z.B. Holz und Papier. Sie ist daher besonders geeignet zur Herstellung von Klebstoffen.

Die erfindungsgemässe Dispersion ermöglicht auch eine Verklebung von cellulosehaltigem Material mit anderen Materialien, z.B. Metallen wie Eisen- oder Aluminiumblech, wobei die Bindefestigkeit wesentlich höher ist als bei einer analogen Dispersion ohne Zusatzstoff. Die Bindefestigkeit einer Verklebung, die sich mit der Dispersion erreichen lässt, wird in Anlehnung an DIN 53 254 wie folgt ermittelt:

Auf einen Prüfkörper aus Buchenholz wird die zu prüfende Dispersion in einer Schichtdicke von 0,3 mm aufgetragen. Darauf wird ein anderer Prüfkörper, entweder aus dem gleichen Holz oder aus anderem Material, z.B. Eisenprüfblech nach Erichsen (DIN 1624) auf einer Fläche von 3 cm² mit einem Druck von 1 bar 10 min lang gepresst. Nach 48 h Lagerung wird die Bindefestigkeit mittels einer Reissmaschine bestimmt und das arithmetische Mittel aus 20 Verklebungen in N/mm² errechnet.

Die folgenden Beispiele dienen zur näheren Erläuterung der Erfindung. Prozentangaben beziehen sich jeweils auf das Gewicht.

*Beispiel 1*

In einen Reaktor, der mit Ankerrührer, Rückflusskühler, Vorrichtungen zum Zudosieren und einem heiz- und kühlbaren Mantel ausgestattet ist, gibt man 65 kg entsalztes Wasser und löst darin bei 80° C 4 kg Polyvinylalkohol mit einem Verseifungsgrad von 88 Mol-%, dessen 4%ige wässerige Lösung eine Viskosität von 26 mPa·s aufweist, 2 kg Polyvinylalkohol mit einem Verseifungsgrad von 98 Mol-%, dessen 4%ige wässerige Lösung eine Viskosität von 20 mPa·s aufweist, und 0,5 kg Polyvinylalkohol mit einem Verseifungsgrad von 98 Mol-%, dessen 4%ige wässerige Lösung eine Viskosität von 4 mPa·s aufweist. In diese Lösung lässt man unter Rühren ein Gemisch aus 90 kg Vinylacetat und 10 kg Paraffinöl, das einen Siedepunkt von 340° C aufweist, einlaufen und gibt 300 g Maleinsäure, 135 g Dibenzoylperoxid und 15 g Kaliumpersulfat hinzu. Dann wird das erhaltene Gemisch bis zur Rückflusstemperatur des Vinylacetats erhitzt. Die Polymerisation ist nach 4 h abgeschlossen. Das Reaktionsgut wird auf Raumtemperatur gekühlt und durch Einrühren von 2 kg 16%iger wässeriger Natriumhydroxidlösung auf einen pH-Wert von 5,0 eingestellt.

*Beispiele 2 bis 5*

Beispiel 1 wird jeweils wiederholt mit der Massgabe, dass folgende Vinylacetat/Paraffinöl-Gemische verwendet werden:
Beispiel 2: 80 kg Vinylacetat und 20 kg Paraffinöl
Beispiel 3: 70 kg Vinylacetat und 30 kg Paraffinöl
Beispiel 4: 60 kg Vinylacetat und 40 kg Paraffinöl
Beispiel 5: 50 kg Vinylacetat und 50 kg Paraffinöl

*Beispiele 6 bis 10*

Beispiel 1 wird jeweils wiederholt mit der Massgabe, dass statt des Vinylacetat/Paraffinöl-Gemisches nun Gemische aus Vinylacetat und Rinderfett (Verseifungszahl 200, Jodzahl 39) oder Kokosöl (Verseifungszahl 260, Jodzahl 9) verwendet werden.

Beispiel  6: 85 kg Vinylacetat und 15 kg Rinderfett
Beispiel  7: 70 kg Vinylacetat und 30 kg Rinderfett
Beispiel  8: 60 kg Vinylacetat und 40 kg Rinderfett
Beispiel  9: 85 kg Vinylacetat und 15 kg Kokosöl
Beispiel 10: 70 kg Vinylacetat und 30 kg Kokosöl

*Anwendungsbeispiele 1 bis 10*

Die Viskosität der nach den Beispielen 1 bis 10 erhaltenen Dispersionen wird bestimmt, und die Bindefestigkeit von Verklebungen mit diesen Dispersionen wird untersucht. Als Vergleich dient eine Dispersion, die analog Beispiel 1, jedoch ohne Zusatzmittel, mit 100 kg Vinylacetat hergestellt worden ist. Die Ergebnisse sind aus Tabelle 1 ersichtlich.

*Tabelle 1*

| Beispiel | Viskosität (Pa·s) | Bindefestigkeit (N/mm²) | |
|---|---|---|---|
| | | Holz/Holz | Holz/Eisen |
| Vergleich | 17 | 7,7 | 4,0 |
| 1 | 20 | 9,6 | 5,5 |
| 2 | 28 | 13 | 8,5 |
| 3 | 31 | 13 | 9,0 |
| 4 | 29 | 11 | 9,0 |
| 5 | 30 | 9,6 | 8,0 |
| 6 | 25 | 10,2 | 8,2 |
| 7 | 28 | 9,0 | 7,1 |
| 8 | 35 | 6,1 | 5,9 |
| 9 | 26 | 10,8 | 8,3 |
| 10 | 26 | 8,8 | 7,4 |

*Beispiel 11*

In einen Reaktor der in Beispiel 1 beschriebenen Art gibt man 62,5 kg entsalztes Wasser und löst darin bei 80° C 4,5 kg Polyvinylalkohol mit einem Verseifungsgrad von 88 Mol-%, dessen 4%ige wässerige Lösung eine Viskosität von 26 mPa·s aufweist, und 3 kg Polyvinylalkohol mit einem Verseifungsgrad von 88 Mol-%, dessen 4%ige wässerige Lösung eine Viskosität von 4 mPa·s aufweist. In diese Lösung gibt man 1,25 g Cobaltacetat, 250 g Maleinsäureanhydrid, 210 g Dibenzoylperoxid und 250 g 20%iges Wasserstoffperoxid. Dann gibt man 25 kg zerkleinertes Paraffin (Schmelzbereich 50 bis 60° C) hinzu und lässt 75 kg Vinylacetat zufliessen. Gleichzeitig mit der Zugabe des Vinylacetats wird das Gemisch auf die Rückflusstemperatur des Vinylacetats erhitzt. Die Polymerisation ist nach 4 h beendet.

*Beispiel 12*

Beispiel 11 wird wiederholt mit der Massgabe, dass ein Vinylacetat/Paraffin-Gemisch aus 50 kg Vinylacetat und 50 kg Paraffin verwendet wird.

*Anwendungsbeispiele 11 und 12*

Die Viskosität der nach den Beispielen 11 und 12 erhaltenen Dispersionen wird bestimmt, und die Bindefestigkeit von Verklebungen mit diesen Dispersionen wird untersucht. Als Vergleich dient eine Dispersion, die analog Beispiel 11, jedoch ohne Zusatzmittel, mit 100 kg Vinylacetat hergestellt worden ist. Die Ergebnisse sind aus Tabelle 2 ersichtlich.

*Tabelle 2*

| Beispiel | Viskosität (Pa·s) | Bindefestigkeit (N/mm²) | |
|---|---|---|---|
| | | Holz/Holz | Holz/Eisen |
| Vergleich | 34 | 8,5 | 7,8 |
| 11 | 20 | 13 | 9,4 |
| 12 | 21 | 9,5 | 8,5 |

*Beispiel 13*

In einen Reaktor der in Beispiel 1 beschriebenen Art gibt man 52,5 kg entsalztes Wasser und löst darin 3 kg Polyvinylalkohol mit einem Verseifungsgrad von 88 Mol-%, dessen 4%ige wässerige Lösung eine Viskosität von 26 mPa·s aufweist, und 2 kg Polyvinylalkohol mit einem Verseifungsgrad von 98 Mol-%, dessen 4%ige wässerige Lösung eine Viskosität von 20 mPa·s aufweist. In diese Lösung gibt man 1,25 g Cobaltacetat, 250 g Maleinsäuremonomethylester, 250 g Acrylsäure, 125 g t-Butylperoctoat und 250 g 30%iges Wasserstoffperoxid. Dann gibt man 30 kg Vaseline hinzu und lässt 70 kg Vinylacetat zufliessen. Gleichzeitig mit der Zugabe des Vinylacetats wird das Reaktionsgemisch auf die Rückflusstemperatur des Vinylacetats erhitzt. Die Polymerisation ist nach 6 h beendet. Danach rührt man eine Lösung von 2,5 kg Polyvinylalkohol mit einem Verseifungsgrad von 88 Mol-%, dessen 4%ige wässerige Lösung eine Viskosität von 40 mPa·s aufweist, in 27,5 kg Wasser ein.

*Beispiel 14*

Beispiel 13 wird wiederholt mit der Massgabe, dass ein Vinylacetat/Vaseline-Gemisch aus 50 kg Vinylacetat und 50 kg Vaseline verwendet wird.

*Anwendungsbeispiele 13 und 14*

Die Viskosität der nach den Beispielen 13 und 14 erhaltenen Dispersionen wird bestimmt, und die Bindefestigkeit von Verklebungen mit diesen Dispersionen wird untersucht. Als Vergleich dient eine Dispersion, die analog Beispiel 13, jedoch ohne Zusatzmittel, mit 100 kg Vinylacetat hergestellt worden ist. Die Ergebnisse sind aus Tabelle 3 ersichtlich.

*(Tabelle auf der nächsten Seite)*

*Beispiel 15*

In einen Reaktor der in Beispiel 1 beschriebenen Art gibt man 65 kg entsalztes Wasser und löst darin 4 kg Polyvinylalkohol mit einem Verseifungsgrad von 88 Mol-%, dessen 4%ige wässerige Lösung

*Tabelle 3*

| Beispiel | Viskosität (Pa·s) | Bindefestigkeit (N/mm²) | |
|---|---|---|---|
| | | Holz/Holz | Holz/Eisen |
| Vergleich | 8 | 8,5 | 4,5 |
| 13 | 12 | 12 | 11 |
| 14 | 8 | 6,4 | 5,5 |

→  *Tabelle 4*

| Beispiel | Viskosität (Pa·s) | Bindefestigkeit (N/mm²) | |
|---|---|---|---|
| | | Holz/Holz | Holz/Eisen |
| Vergleich | 22 | 7,1 | 2,2 |
| 15 | 17 | 9,1 | 4,8 |
| 16 | 19 | 11 | 7,6 |
| 17 | 22 | 11 | 8,6 |
| 18 | 21 | 9,0 | 3,8 |
| 19 | 22 | 4,5 | 2,4 |

eine Viskosität von 25 mPa·s aufweist, 2 kg Polyvinylalkohol mit einem Verseifungsgrad von 98 Mol-%, dessen 4%ige wässerige Lösung eine Viskosität von 20 mPa·s aufweist, und 2 kg Polyvinylalkohol mit einem Verseifungsgrad von 88 Mol-%, dessen 4%ige wässerige Lösung eine Viskosität von 4 mPa·s aufweist. In diese Lösung gibt man unter Rühren 300 g Maleinsäure, 90 g Dibenzoylperoxid, 10 g Dicyclohexylperoxydicarbonat, 2 g Hydrochinonmonomethylether und 20 g Kaliumpersulfat sowie 90 kg Vinylacetat und 10 kg gehärteten Talg (Schmelzpunkt 55° C, Jodzahl 1, Verseifungszahl 205). Durch Erwärmen des Gemisches bis zur Rückflusstemperatur des Vinylacetats startet man die Polymerisation. Die Reaktionstemperatur erreicht nach 4 h ihr Maximum von 86° C. Dann gibt man noch 100 g 30%iges Wasserstoffperoxid zu und hält die Dispersion noch 1 h lang bei einer Temperatur von 80° C. Nach Abkühlen auf Raumtemperatur wird die Dispersion durch Einrühren von 2 kg 16%iger wässeriger Natriumhydroxidlösung auf einen pH-Wert von 5,5 eingestellt.

*Beispiele 16 bis 19:*

Beispiel 15 wird jeweils wiederholt mit der Massgabe, dass Vinylacetat und Talg in den folgenden Mengen verwendet werden:
Beispiel 16: 80 kg Vinylacetat und 20 kg Talg
Beispiel 17: 70 kg Vinylacetat und 30 kg Talg
Beispiel 18: 60 kg Vinylacetat und 40 kg Talg
Beispiel 19: 50 kg Vinylacetat und 50 kg Talg

*Anwendungsbeispiele 15 bis 19*

Die Viskosität der nach den Beispielen 15 bis 19 erhaltenen Dispersionen wird bestimmt, und die Bindefestigkeit von Verklebungen mit diesen Dispersionen wird untersucht. Als Vergleich dient eine Dispersion, die analog Beispiel 15, jedoch ohne Zusatzmittel, mit 100 kg Vinylacetat hergestellt worden ist. Die Ergebnisse sind aus Tabelle 4 ersichtlich.

*Tabelle →*

*Beispiel 20*

In einen Reaktor der in Beispiel 1 beschriebenen Art gibt man 65 kg entsalztes Wasser und löst darin 4 kg Polyvinylalkohol mit einem Verseifungsgrad von 88 Mol-%, dessen 4%ige wässerige Lösung eine Viskosität von 26 mPa·s aufweist, 2 kg Polyvinylalkohol mit einem Verseifungsgrad von 98 Mol-%, dessen 4%ige wässerige Lösung eine

Viskosität von 20 mPa·s aufweist, und 2 kg Polyvinylalkohol mit einem Verseifungsgrad von 88 Mol-%, dessen 4%ige wässerige Lösung eine Viskosität von 4 mPa·s aufweist. In diese Lösung gibt man unter Rühren 100 g Azodiisobutyronitril und 20 g Ammoniumpersulfat sowie 90 kg Vinylacetat und 10 kg gehärtetes Pflanzenfett (Schmelzpunkt 65° C, Jodzahl 4, Verseifungszahl 190). Durch Erwärmen des Gemisches bis zur Rückflusstemperatur des Vinylacetats wird die Polymerisation in Gang gesetzt. Nach Erreichen der Maximaltemperatur von 83° C nach 4 h werden 100 g 30%iges Wasserstoffperoxid und 100 g Ascorbinsäure zugegeben. Die dann auf Raumtemperatur abgekühlte Dispersion wird mit 2 kg 16%iger wässeriger Natriumhydroxydlösung auf einen pH-Wert von 4,5 eingestellt.

*Beispiele 21 bis 24*

Beispiel 20 wird jeweils wiederholt mit der Massgabe, dass Vinylacetat und Pflanzenfett in den folgenden Mengen verwendet werden:
Beispiel 21: 80 kg Vinylacetat und 20 kg Pflanzenfett
Beispiel 22: 70 kg Vinylacetat und 30 kg Pflanzenfett
Beispiel 23: 60 kg Vinylacetat und 40 kg Pflanzenfett
Beispiel 24: 50 kg Vinylacetat und 50 kg Pflanzenfett

*Anwendungsbeispiele 20 bis 24*

Die Viskosität der nach den Beispielen 20 bis 24 erhaltenen Dispersionen wird bestimmt, und die Bindefestigkeit von Verklebungen mit diesen Dispersionen wird untersucht. Als Vergleich dient eine Dispersion, die analog Beispiel 20, jedoch ohne Zusatzmittel, mit 100 kg Vinylacetat hergestellt worden ist. Die Ergebnisse sind aus Tabelle 5 ersichtlich.

*(Tabelle auf der nächsten Seite)*

*Beispiel 25*

In einen Reaktor der in Beispiel 1 beschriebenen Art gibt man 65 kg entsalztes Wasser und löst darin 4 kg Polyvinylalkohol mit einem Verseifungsgrad von 88 Mol-%, dessen 4%ige wässerige Lösung eine Viskosität von 23 mPa·s aufweist, 2 kg Polyvinylalkohol mit einem Verseifungsgrad von 94

*Tabelle 5*

| Beispiel | Viskosität (Pa·s) | Bindefestigkeit (N/mm²) | |
|---|---|---|---|
| | | Holz/Holz | Holz/Eisen |
| Vergleich | 17 | 7,4 | 1,3 |
| 20 | 18 | 8,2 | 4,4 |
| 21 | 21 | 9,2 | 5,1 |
| 22 | 31 | 9,1 | 6,1 |
| 23 | 40 | 7,2 | 6,3 |
| 24 | 43 | 6,4 | 4,2 |

Mol-%, dessen 4%ige wässerige Lösung eine Viskosität von 30 mPa·s aufweist, und 0,5 kg Polyvinylalkohol mit einem Verseifungsgrad von 98 Mol-%, dessen 4%ige Lösung eine Viskosität von 3 mPa·s aufweist. In diese Lösung gibt man unter Rühren 70 kg Vinylacetat, 30 kg Paraffinöl (Siedepunkt 300° C), 250 g Maleinsäureanhydrid und 200 g oxymethansulfonsaures Natrium. Unter Rühren erhitzt man das Gemisch auf Rückflusstemperatur und dosiert im Laufe von 5 h 5 kg einer wässerigen 1%igen Lösung von Wasserstoffperoxid zu. Dabei steigt die Temperatur allmählich auf 85° C an. Danach lässt man die Dispersion auf Raumtemperatur abkühlen.

*Anwendungsbeispiel 25*

Die Viskosität der nach Beispiel 25 erhaltenen Dispersion wird bestimmt, und die Bindefestigkeit von Verklebungen mit dieser Dispersion wird untersucht. Als Vergleich dient eine Dispersion, die analog Beispiel 25, jedoch ohne Zusatzmittel, mit 100 kg Vinylacetat hergestellt worden ist. Die Ergebnisse sind aus Tabelle 6 ersichtlich.

*Tabelle 6*

| Beispiel | Viskosität (Pa·s) | Bindefestigkeit (N/mm²) | |
|---|---|---|---|
| | | Holz/Holz | Holz/Eisen |
| Vergleich | 53 | 9,8 | 5,5 |
| 25 | 51 | 10,7 | 8,3 |

*Beispiel 26*

In einen Reaktor der in Beispiel 1 beschriebenen Art gibt man 87,5 kg entsalztes Wasser und löst darin 10 kg Polyvinylalkohol mit einem Verseifungsgrad von 88 Mol-%, dessen 4%ige wässerige Lösung eine Viskosität von 18 mPa·s aufweist. In diese Lösung gibt man 70 kg Vinylacetat und 30 kg gehärteten Talg (Schmelzpunkt 55° C, Jodzahl 3, Verseifungszahl 195) und ausserdem 1 g Hydrochinonmonomethyläther, 300 g Itaconsäure, 50 g Dibenzoylperoxid und 30 g Ammoniumpersulfat. Das Gemisch erhitzt man unter Rühren auf die Rückflusstemperatur des Vinylacetats. Die Reaktionstemperatur erreicht nach 4 h ihr Maximum von 87° C. Nach weiteren 30 min werden 100 g 30%iges Wasserstoffperoxid und 100 g Ascorbinsäure zugegeben. 30 min später wird das Gemisch auf Raumtemperatur gekühlt und durch Zugabe von 5 kg 4%iger wässeriger Natriumhydroxydlösung auf einen pH-Wert von 4,8 eingestellt.

*Beispiel 27*

Beispiel 26 wird wiederholt mit der Massgabe, dass Vinylacetat und Talg jeweils in einer Menge von 50 kg verwendet werden.

*Anwendungsbeispiele 26 und 27*

Die Viskosität der nach den Beispielen 26 und 27 erhaltenen Dispersionen wird bestimmt, und die Bindefestigkeit von Verklebungen mit diesen Dispersionen wird untersucht. Als Vergleich dient eine Dispersion, die analog Beispiel 26, jedoch ohne Zusatzmittel, mit 100 kg Vinylacetat hergestellt worden ist. Die Ergebnisse sind aus Tabelle 7 ersichtlich.

*Tabelle 7*

| Beispiel | Viskosität (Pa·s) | Bindefestigkeit (N/mm²) | |
|---|---|---|---|
| | | Holz/Holz | Holz/Eisen |
| Vergleich | 13 | 7,5 | 4,8 |
| 26 | 10 | 8,6 | 6,9 |
| 27 | 38 | 6,7 | 7,0 |

**Patentansprüche**

1. Wässerige Polyvinylester-Dispersion mit einem Feststoffgehalt von 40 bis 70 Gew.-%, wobei ein Teil der Feststoffe aus einem wachs-, fett- oder ölartigen Zusatzmittel besteht, dadurch gekennzeichnet, dass die Dispersion 5 bis 60 Gew.-% (bezogen auf die Gesamtmenge aus Polyvinylester und Zusatzmittel) eines wachs-, fett- oder ölartigen Zusatzmittels und 3 bis 15 Gew.-% (bezogen auf die Gesamtmenge aus Polyvinylester und Zusatzmittel) Polyvinylalkohol enthält, der einen Verseifungsgrad von 65 bis 99,5 Mol-% und dessen 4gew.-%ige wässerige Lösung eine Viskosität von 2 bis 50 mPa·s, gemessen bei einer Temperatur von 20° C, aufweist.

2. Verfahren zur Herstellung einer wässerigen Polyvinylesterdispersion mit einem Feststoffgehalt von 40 bis 70 Gew.-%, wobei ein Teil der Feststoffe aus einem wachs-, fett- oder ölartigen Zusatzmittel besteht, durch radikalische Polymerisation eines Vinylesters in wässeriger Emulsion in Gegenwart von Polyvinylalkohol, dadurch gekennzeichnet, dass man die Polymerisation in Gegenwart von 3 bis 15 Gew.-% (bezogen auf die Gesamtmenge aus Polyvinylester und Zusatzmittel) Polyvinylalkohol, der einen Verseifungsgrad von 65 bis 99,5 Mol-% und dessen 4gew.-%ige wässerige Lösung eine Viskosität von 2 bis 50 mPa·s aufweist, gemessen bei einer Temperatur von 20° C, und in Gegenwart des wachs-, fett- oder ölartigen Zusatzmittels durchführt.

3. Verfahren zur Herstellung einer wässerigen Polyvinylesterdispersion mit einem Feststoffgehalt von 40 bis 70 Gew.-%, wobei ein Teil der Feststoffe aus einem wachs-, fett- oder ölartigen Zusatzmittel besteht, durch radikalische Polymerisation eines Vinylesters in wässeriger Emulsion in Gegenwart von Polyvinylalkohol, dadurch gekennzeichnet, dass man die Polymerisation in Gegenwart von 3 bis 15 Gew.-% (bezogen auf die Gesamtmenge aus Polyvinylester und Zusatzmittel) Polyvinylalkohol, der einen Verseifungsgrad von 65 bis 99,5 Mol-% und dessen 4gew.-%ige wässerige Lösung eine Viskosität von 2 bis 50 mPa·s aufweist, gemessen bei einer Temperatur von 20° C, durchführt und anschliessend das wachs-, fett- oder ölartige Zusatzmittel homogen in der erhaltenen Dispersion verteilt.

4. Verwendung der Dispersion gemäss Anspruch 1 zur Herstellung von Klebstoffen für cellulosehaltige Stoffe.

## Claims

1. An aqueous polyvinyl ester dispersion having a solids content of 40 to 70% by weight, in which a part of the solids is a waxy, fatty or oily additive, which dispersion comprises 5 to 60% by weight (relative to the total amount of polyvinyl ester and additive) of a waxy, fatty or oily additive and 3 to 15% by weight (relative to the total amount of polyvinyl ester and additive) of a polyvinyl alcohol which has a degree of hydrolysis of 65 to 99.5 mol-%, and a 4% by weight strength aqueous solution of which has a viscosity of 2 to 50 mPa·s, measured at a temperature of 20° C.

2. A process for the preparation of an aqueous polyvinyl ester dispersion having a solids content of 40 to 70% by weight, in which a part of the solids is a waxy, fatty or oily additive, by free radical polymerization of a vinyl ester in an aqueous emulsion, in the presence of a polyvinyl alcohol, which process comprises carrying out the polymerization in the presence of 3 to 15% by weight (relative to the total amount of polyvinyl ester and additive) of a polyvinyl alcohol which has a degree of hydrolysis of 65 to 99.5 mol-%, and a 4% by weight strength aqueous solution of which has a viscosity of 2 to 50 mPa·s, measured at a temperature of 20° C, and in the presence of a waxy, fatty or oily additive.

3. A process for the preparation of an aqueous polyvinyl ester dispersion having a solids content of 40 to 70% by weight, in which a part of the solids is a waxy, fatty or oily additive, by free radical polymerization of a vinyl ester in an aqueous emulsion, in the presence of a polyvinyl alcohol, which process comprises carrying out the polymerisation in the presence of 3 to 15% by weight (relative to the total amount of polyvinyl ester and additive) of a polyvinyl alcohol which has a degree of hydrolysis of 65 to 99.5 mol-%, and a 4% by weight strength aqueous solution of which has a viscosity of 2 to 50 mPa·s., measured at a temperature of 20° C, and then homogeneously dispersing the waxy, fatty or oily additive in the dispersion obtained.

4. The use of a dispersion as claimed in Claim 1 for the preparation of adhesives for cellulose-containing materials.

## Revendications

1. Dispersion aqueuse d'un ester polyvinylique dont la teneur en matières solides est de 40 à 70% en poids, une partie des matières solides étant constituée d'un additif analogue à une cire, à une graisse ou à une huile, dispersion caractérisée en ce qu'elle contient de 5 à 60% en poids (par rapport à la quantité totale de l'ester polyvinylique et de l'additif) d'un additif analogue à une cire, à une graisse ou à une huile, et de 3 à 15% en poids (par rapport à la quantité totale de l'ester polyvinylique et de l'additif) d'un poly(alcool vinylique) qui a un degré de saponification de 65 à 99,5% en moles et dont la solution aqueuse à 4% en poids a une viscosité, mesurée à 20° C, comprise entre 2 et 50 mPa·s.

2. Procédé de préparation d'une dispersion aqueuse d'un ester polyvinylique dont la teneur en matières solides est de 40 à 70% en poids, une partie des matières solides étant constituée d'un additif analogue à une cire, à une graisse ou à une huile, par polymérisation radicalaire d'un ester vinylique, en émulsion aqueuse, en présence d'un poly(alcool vinylique), procédé caractérisé en ce qu'on effectue la polymérisation en présence de 3 à 15% en poids (par rapport à la quantité totale de l'ester polyvinylique et de l'additif) d'un poly(alcool vinylique) qui a un degré de saponification de 65 à 99,5% en moles et dont la solution aqueuse à 4% en poids a une viscosité, mesurée à 20° C, de 2 à 50 mPa·s, et en présence de l'additif analogue à une cire, à une graisse ou à une huile.

3. Procédé de préparation d'une dispersion aqueuse d'un ester polyvinylique dont la teneur en matières solides est de 40 à 70% en poids, une partie des matières solides étant constituée d'un additif analogue à une cire, à une graisse ou à une huile, par polymérisation radicalaire d'un ester vinylique, en émulsion aqueuse, en présence d'un poly(alcool vinylique), procédé caractérisé en ce qu'on effectue la polymérisation en présence de 3 à 15% en poids (par rapport à la quantité totale de l'ester polyvinylique et de l'additif) d'un poly(alcool vinylique) qui a un degré de saponification de 65 à 99,5% en moles et dont la solution aqueuse à 4% en poids a une viscosité, mesurée à 20° C, de 2 à 50 mPa·s, puis, dans la dispersion ainsi obtenue, on répartit de façon homogène l'additif analogue à une cire, à une graisse ou à une huile.

4. Application de la dispersion selon la revendication 1 à la préparation d'adhésifs pour matières contenant de la cellulose.